# EUROPÄISCHE PATENTANMELDUNG

(11) **EP 4 697 116 A2**
(43) Veröffentlichungstag der Anmeldung: **18.02.2026**
(21) Anmeldenummer: 25224905.7
(22) Anmeldetag: 25.10.2022
(51) Int. Cl.: G05D 1/00

(54) **VERFAHREN UND SYSTEM ZUR NAVIGATION EINES FLURFÖRDERZEUGS**

(30) Priorität: 23.11.2021 DE 102021130631
(62) Teilanmeldung aus: 22203506.5
(71) Anmelder: STILL GmbH, 22113 Hamburg (DE)
(72) Erfinder: Abel, Bengt, 21335 Lüngeburg (DE); Koenig, Ralf, 21365 Adendorf (DE); Schuethe, Dennis, 21244 Buchholz (DE); Viereck, Volker, 23898 Kühsen (DE)
(74) Vertreter: Patentship Patentanwaltgesellschaft

(57) **Zusammenfassung**

Die Erfindung betrifft ein Verfahren zur Navigation eines Flurförderzeugs (1) mit einer Sensorik (5) zur Erkennung von Informationen im Betriebsbereich des Flurförderzeugs (1) und einer Datenverarbeitungseinrichtung (9) zur Auswertung dieser Informationen und Erstellung von Navigationsanweisungen und/oder Steuerungsbefehlen zur Navigation des Flurförderzeugs (1), wobei ausgehend von einer Erkundungsfahrt zunächst in der Datenverarbeitungseinrichtung (9) eine Umgebungskarte in einem Fahrzeugkoordinatensystem (2) mit Hilfe der Sensorik (5) erstellt wird und bei einer späteren Navigationsfahrt eine von der Sensorik (5) aktuell aufgenommene Szene in der Datenverarbeitungseinrichtung (9) mit der Umgebungskarte verglichen wird und eine Lokalisierung des Flurförderzeugs (1) im Fahrzeugkoordinatensystem (2) durchgeführt wird. Es wird vorgeschlagen, dass mindestens eine Markierung (6, 7, 8, 10, 11, 12, 13) mit bekannter globaler Position im Betriebsbereich des Flurförderzeugs (1) mittels der Sensorik (5) erfasst wird, und durch Auswertung der Sensordaten in der Datenverarbeitungseinrichtung (9) ein Referenzkoordinatensystem (3) festgelegt wird, und die im Fahrzeugkoordinatensystem (2) erstellte Umgebungskarte in der Datenverarbeitungseinrichtung (9) mit dem Referenzkoordinatensystem (3) abgeglichen wird, und die Lokalisierung des Flurförderzeugs (1) im Fahrzeugkoordinatensystem (2) in der Datenverarbeitungseinrichtung (9) in eine Lokalisierung des Flurförderzeugs (1) im Referenzkoordinatensystem (3) überführt wird.

## Beschreibung

Die Erfindung betrifft ein Verfahren zur Navigation eines Flurförderzeugs, insbesondere eines autonomen oder automatisierten Flurförderzeugs, mit einer Sensorik zur Erkennung von Informationen im Betriebsbereich des Flurförderzeugs und einer Datenverarbeitungseinrichtung zur Auswertung dieser Informationen und Erstellung von Navigationsanweisungen und/oder Steuerungsbefehlen zur Navigation des Flurförderzeugs, wobei ausgehend von einer Erkundungsfahrt zunächst in der Datenverarbeitungseinrichtung eine Umgebungskarte in einem Fahrzeugkoordinatensystem mit Hilfe der Sensorik erstellt wird und bei einer späteren Navigationsfahrt eine von der Sensorik aktuell aufgenommene Szene in der Datenverarbeitungseinrichtung mit der Umgebungskarte verglichen wird und eine Lokalisierung des Flurförderzeugs im Fahrzeugkoordinatensystem durchgeführt wird.

Außerdem betrifft die Erfindung ein System zur Durchführung des Verfahrens.

Beim Betrieb von Flurförderzeugen kommen vermehrt Navigationssysteme zum Einsatz, die einen automatisierten oder teilautomatisierten Betrieb eines Flurförderzeugs ermöglichen sollen. Da Flurförderzeuge meistens in definierten Betriebsbereichen, zum Beispiel in Warenlagern, eingesetzt werden, können hierfür ortsbezogene Navigationssysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, zum Beispiel einem optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Es sind auch schon Methoden vorgeschlagen worden, mit denen sich ein autonomes oder automatisiertes Flurförderzeug selbst in unbekannten Umgebungen lokalisieren kann. Hierzu gehört die sogenannte SLAM-Methode, die seit einigen Jahren in der Robotik verwendet wird. "SLAM" ist die englische Abkürzung für "Simultaneous Localization and Mapping". Hierbei wird ausgehend von einer Erkundungsfahrt des Flurförderzeugs im Betriebsbereich zunächst eine Umgebungskarte mit Hilfe der genutzten Sensorik am Roboter, die zum Beispiel Kameras, Laserscanner und Ultraschallsensoren umfassen kann, erstellt. Kommt das autonome oder automatisierte Flurförderzeug an einer Position entlang, die das Flurförderzeug schon kartografiert hat, kann das Flurförderzeug sich mittels seiner Karte und der Messwerte der Sensorik lokalisieren. Dabei findet auch ein Update der Karte statt, falls sich die von der Sensorik aufgenommene Szene von der Karte unterscheidet. Dies kann zum Beispiel der Fall sein, wenn Paletten oder Fahrzeuge ihre zuvor kartografierte Position verändert haben.

Begonnen hat die SLAM-Methode mit Lasersensorik und wurde dann in den Jahren erweitert auf andere Sensoriken, wie zum Beispiel 2D- und 3D-Kameras, Inertial Measurement Units (IMUs), Ultraschallsensoren etc..

Der Nachteil der SLAM-Methode besteht darin, dass bei Initialisierung des autonomen oder automatisierten Flurförderzeugs die aktuelle Fahrzeugposition als Ursprung, also mit einer Pose bezüglich der Raumachsen x = y = z = 0 und bezüglich der Raumwinkel phi = psi = rho = 0, angenommen wird, ohne einen Bezug zur Umgebung oder zu anderen Fahrzeugen herzustellen.

Das Problem, dass sich mehrere autonome oder automatisierte Flurförderzeuge eine gemeinsame Karte teilen und sich über ein Referenzkoordinatensystem austauschen, wurde von der Wissenschaft unter dem Stichwort Multi-Vehicle-SLAM (MVSLAM) gelöst. Auch wenn hier die einzelnen autonomen oder automatisierten Flurförderzeuge sich zu einem Referenzsystem einigen, fehlt ihnen der Bezug zur Umgebung. Es fehlt also ein Referenzsystem, das auch die Umgebung, zum Beispiel eine Lagerhalle, nutzt, um beispielsweise Regalpositionen und ähnliches anzugeben.

Die Grundlagen der SLAM-Methode sind in der folgenden Fachliteratur beschrieben:
(1) D. Moratuwage, B. Vo and D. Wang, "A hierarchical approach to the Multi-Vehicle-SLAM-Problem", 2012 15 th International Conference on Information Fusion, Singapore, 2012, pp. 1119-1125.
(2) F. Zhang, H. Stähle, G. Chen, C. Buckl and A. Knoll, "Multiple vehicle cooperative localization under random finite set framework", 2013 IEEE/RSJ International Conference on Intelligent Robots and Systems, Tokyo, 2013, pp. 1405-1411.
(3) D. Moratuwage, B. Vo and D. Wang, "Collaborative multi-vehicle SLAM with moving object tracking", 2013 IEEE International Conference on Robotics and Automation, Karlsruhe, 2013, pp. 5702-5708.

Der vorliegenden Erfindung liegt die Aufgabe zugrunde, ein Verfahren der genannten Art sowie ein System zur Durchführung des Verfahrens so auszugestalten, dass eine verbesserte Lokalisierung des Flurförderzeugs ermöglicht wird.

Diese Aufgabe wird verfahrensseitig erfindungsgemäß dadurch gelöst, dass mindestens eine Markierung mit bekannter globaler Position im Betriebsbereich des Flurförderzeugs mittels der Sensorik erfasst wird, und durch Auswertung der Sensordaten in der Datenverarbeitungseinrichtung ein Referenzkoordinatensystem festgelegt wird, und die im Fahrzeugkoordinatensystem erstellte Umgebungskarte in der Datenverarbeitungseinrichtung mit dem Referenzkoordinatensystem abgeglichen wird, und die Lokalisierung des Flurförderzeugs im Fahrzeugkoordinatensystem in der Datenverarbeitungseinrichtung in eine Lokalisierung des Flurförderzeugs im Referenzkoordinatensystem überführt wird.

Dabei liegt der Erfindung die Überlegung zu Grunde, dass durch Festlegung eines Referenzkoordinatensystems ein Bezug zwischen dem mit der SLAM-Methode oder einem anderen Kartierungsverfahren mittels der Sensorik des Flurförderzeugs aufgenommenen Umgebungskarte und der tatsächlichen Betriebsumgebung des autonomen oder automatisierten Flurförderzeugs hergestellt werden kann. Dadurch wird ein Verständnis des autonomen oder automatisierten Flurförderzeugs darüber erzeugt, wo es sich in der eigenen erstellten Umgebungskarte und in der globalen Arbeitsumgebung befindet. Dies ermöglicht zugleich ein Abgleichen von Umgebungskarten verschiedener Flurförderzeuge.

In einer vorteilhaften Ausgestaltung wird eine Markierung verwendet, deren dreidimensionale Pose, insbesondere deren translatorische Position in den drei Raumachsen x, y und z sowie deren räumliche Orientierung durch Raumwinkel-Drehungen um die drei Raumachsen, bekannt ist. In diesem Fall genügt eine einzige Markierung, um ein Referenzkoordinatensystem festzulegen.

Da in realen Anwendungen die Raumwinkelinformationen in der Regel nicht bekannt sind, sieht eine bevorzugte Weiterbildung der Erfindung vor, dass mindestens zwei Markierungen verwendet werden, deren translatorische Positionen in den drei Raumachsen x, y und z bekannt sind.

Zweckmäßigerweise wird als Markierung eine natürliche Markierung im Betriebsbereich des Flurförderzeugs, insbesondere ein Infrastrukturelement, zum Beispiel ein Schild, eine Regalstütze oder eine Wand, verwendet. Wichtig ist dabei eine eindeutige Zuordnung. Gibt es mehrere dieser natürlichen Markierungen mit ähnlicher Anordnung im Raum, sind diese als natürliche Markierung nicht geeignet.

Zusätzlich oder alternativ kann als Markierung auch eine künstliche Markierung, insbesondere ein Reflektor, ein QR-Code oder ein Aruco-Marker, verwendet werden. Derartige künstliche Markierungen können zudem die Eindeutigkeit erhöhen, da sie so in der Umgebung nicht natürlich vorkommen.

Bei den beiden genannten Markierungsverfahren unter Nutzung von natürlichen oder künstlichen Markierungen ist es von Vorteil, wenn dem, beispielsweise auf der SLAM-Methode basierenden, Kartierungsverfahren mitgeteilt wird, auf welche Markierung das Referenzkoordinatensystem gelegt wird und wie sich dieses zu der Markierung verhält.

Gemäß einer besonders bevorzugten Weiterbildung des Erfindungsgedankens wird mindestens eine Markierung verwendet, die maschinenlesbare Informationen, insbesondere Codes, zu ihrer globalen Position enthält, welche mittels der Sensorik abgerufen und in der Datenverarbeitungseinrichtung ausgewertet werden, um die im Fahrzeugkoordinatensystem erstellte Umgebungskarte mit dem Referenzkoordinatensystem abzugleichen.

Für die Sensorik wird vorzugsweise eine optische Sensorik verwendet, die insbesondere eine 2D- oder 3D-Kamera umfasst. Mit der optischen Sensorik können die Markierungen und deren gegebenenfalls vorhandenen maschinenlesbaren Informationen einfach erfasst werden.

Außerdem ist es zur Erhöhung der Robustheit des Verfahrens von Vorteil, wenn eine größere Anzahl von für das Flurförderzeug gut sichtbaren Markierungen im Betriebsbereich des Flurförderzeugs, zum Beispiel in einer Lagerhalle, platziert sind.

Die Codes der Markierungen enthalten die globale Position in den drei Raumachsen x, y und z, wobei für die Fahrzeuglokalisierung in der Regel nur zwei Raumachsen x und y benötigt werden. Dies hat zudem den Vorteil, dass sich das Flurförderzeug immer wieder erneut referenzieren kann und einen erneuten Abgleich seiner Pose zur Referenzpose der Markierungen machen kann.

Ein entscheidender Vorteil der Erfindung besteht auch darin, dass durch den Einsatz weniger Markierungen, die über den gesamten Einsatzraum des Flurförderzeugs verteilt sind, Skalierungsfehler, die bei herkömmlichen visuellen SLAM-Verfahren (LDSO, ORB-SLAM, etc.) entstehen, korrigiert werden können. Dadurch kann gewährleistet werden, dass auch selbst erlernte, beispielsweise geteachte Umgebungskarten dauerhaft global korrekt bleiben, so dass auf künstlicher Basis, zum Beispiel mittels CAD-Tool etc., erzeugte Positionsinformationen überlagerter Systeme, wie zum Beispiel für das Warenmanagement, verwendet werden können. Die geteachten Umgebungskarten heutiger SLAM-basierter Systeme, müssen händisch korrigiert werden. Anfahrpositionen können nicht aus künstlich erzeugten Positionen abgeleitet werden, sondern müssen ebenfalls aufwändig geteacht werden. Derartige unattraktive Nachbearbeitungsschritte können mit der Erfindung insofern entfallen.

In einer technisch einfachen Variante der Erfindung ist vorgesehen, dass die Umgebungskarte von einer Anzeigeeinrichtung, zum Beispiel einem am Flurförderzeug verbauten Display oder einem Smartphone, angezeigt wird und eine Bedienperson interaktiv das Referenzkoordinatensystem an der Anzeigevorrichtung setzen kann.

Die Aufgabe wird ebenfalls durch Verfahren zur Erstellen einer Karte mit einer Sensorik zur Erkennung von Informationen im Betriebsbereich eines Flurförderzeugs gelöst, wobei ausgehend von einer Erkundungsfahrt zunächst in einer Datenverarbeitungseinrichtung eine Umgebungskarte in einem Fahrzeugkoordinatensystem mit Hilfe der Sensorik erstellt wird, und die Umgebungskarte mit einem Referenzkoordinatensystem des Betriebsbereichs abgeglichen wird, indem die Umgebungskarte mit einer CAD-Karte des Betriebsbereichs abgeglichen wird.

Die Umgebungskarte wird insbesondere derart mit der CAD-Karte des Betriebsbereichs abgeglichen, dass die Umgebungskarte deckungsgleich mit der CAD-Karte ist.

Die mittels der Sensorik, beispielsweise anhand der SLAM-Methode, erstelle Umgebungskarte im Fahrzeugkoordinatensystem kann hierzu insbesondere in ein Computerprogramm exportiert werden, das bevorzugt auf einer Datenverarbeitungsvorrichtung abläuft. In das Computerprogramm wird weiterhin eine das Referenzkoordinatensystem definierende CAD-Karte des Betriebsbereich geladen. In dem Computerprogramm wird die mittels der Sensorik erstelle Umgebungskarte über die CAD-Karte gelegt und die Umgebungskarte mit der CAD-Karte des Betriebsbereichs derart abgeglichen, dass die Umgebungskarte deckungsgleich mit der CAD-Karte ist. Dieser Abgleich kann automatisiert von dem Computerprogramm durchgeführt werden, indem dieses soweit optimiert, dass die Karten möglichst gut zusammenpassen. Alternativ oder zusätzlich kann ein Bediener händisch die mittels der Sensorik erstellte Umgebungskarte derart verschieben, dass die Umgebungskarte mit der CAD-Karte deckungsgleich ist. Noch bestehende Abweichungen können von dem Computerprogramm optimiert werden. Die Verschiebung bzw. der Offset der Umgebungskarte kann anschließend in eine Datenverarbeitungseinrichtung des Flurförderzeugs exportiert werden, so dass die im Fahrzeugkoordinatensystem erstellte Umgebungskarte und das Referenzkoordinatensystem übereinander liegen.

Die Erfindung betrifft ferner ein System zur Durchführung des Verfahrens zur Navigation eines Flurförderzeugs mit einer am Flurförderzeug angeordneten Sensorik zur Erkennung von Informationen im Betriebsbereich des Flurförderzeugs und einer Datenverarbeitungseinrichtung zur Auswertung dieser Informationen und Erstellung von Navigationsanweisungen und/oder Steuerungsbefehlen zur Navigation des Flurförderzeugs, wobei die Datenverarbeitungseinrichtung dazu eingerichtet ist, aus Sensordaten einer Erkundungsfahrt eine Umgebungskarte in einem Fahrzeugkoordinatensystem zu erstellen und aus Sensordaten einer Navigationsfahrt eine Lokalisierung des Flurförderzeugs in der Umgebungskarte durchzuführen.

Bei dem System wird die gestellte Aufgabe erfindungsgemäß dadurch gelöst, dass mindestens eine Markierung mit bekannter globaler Position im Betriebsbereich des Flurförderzeugs vorgesehen ist, die durch die Sensorik detektierbar ist, und die Datenverarbeitungseinrichtung dazu eingerichtet ist, aufgrund der bekannten Position der Markierung ein Referenzkoordinatensystem festzulegen und die im Fahrzeugkoordinatensystem erstellte Umgebungskarte mit dem Referenzkoordinatensystem abzugleichen und die Lokalisierung des Flurförderzeugs im Fahrzeugkoordinatensystem in eine Lokalisierung des Flurförderzeugs im Referenzkoordinatensystem zu überführen.

Die Erfindung bietet eine ganze Reihe von Vorteilen:
Das erfindungsgemäße Verfahren senkt den Aufwand zur Einrichtung eines Navigationssystems eines autonomen oder automatisierten Flurförderzeugs für das Bedienpersonal vor Ort oder einen Servicetechniker, der dies als Serviceleistung mit anbieten kann. Aktuell ist eine manuelle Kalibrierung des Navigationssystems eines autonomen oder automatisierten Flurförderzeugs nur durch spezialisiertes Fachpersonal möglich. Mit der Erfindung wird eine automatische Einrichtung durch das Flurförderzeug selbst ermöglicht.

Der Vorteil ist zudem, dass ein bestehendes Referenzkoordinatensystem, das zum Beispiel für ein betreiberseitiges Managementsoftwaresystem verwendet wird, nicht für jedes Flurförderzeug abgeändert werden muss. Es genügt ein Referenzkoordinatensystem, das eine Lokalisierung der Flurförderzeuge innerhalb einer Umgebung ermöglicht und somit die Ausführung von Aufträgen erlaubt. Dadurch können ohne großen Einrichtungsaufwand die Flurförderzeuge beauftragt werden. Zudem haben alle in einem Betriebsbereich vorhandenen autonomen oder automatisierten Flurförderzeuge ein gemeinsames Referenzkoordinatensystem und können somit miteinander besser agieren.

Weitere Vorteile und Einzelheiten der Erfindung werden anhand der in den schematischen Figuren dargestellten Ausführungsbeispiele näher erläutert. Hierbei zeigen
- Figur 1: ein Prinzipbild für den Zusammenhang zwischen Fahrzeugkoordinatensystem und Referenzkoordinatensystem,
- Figur 2: eine Darstellung natürlicher Markierungen zur Referenzkoordinatenbestimmung,
- Figur 3: eine alternative Darstellung natürlicher Markierungen zur Referenzkoordinatenbestimmung und
- Figur 4: eine Darstellung künstlicher Markierungen zur Referenzkoordinatenbestimmung.

In den unterschiedlichen Figuren sind dieselben Merkmale mit denselben Bezugsziffern bezeichnet.

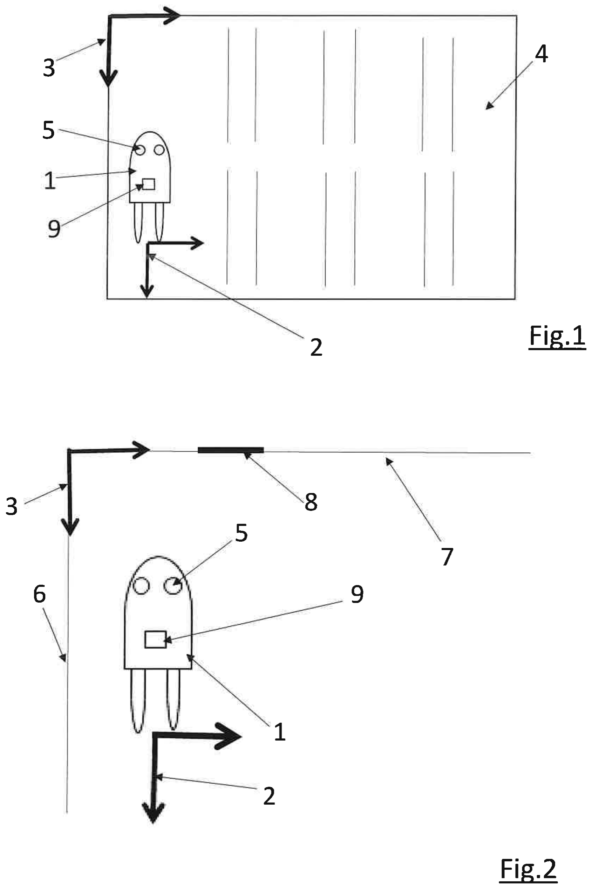

In der Figur 1 ist der prinzipielle Zusammenhang zwischen dem Fahrzeugkoordinatensystem 2 eines autonomen oder automatisierten Flurförderzeugs 1 und dem Referenzkoordinatensystem 3 des Betriebsbereichs, beispielswiese einer Lagerhalle 4, dargestellt. Zunächst wird ausgehend von einer Erkundungsfahrt im Betriebsbereich in der Datenverarbeitungseinrichtung 9 des Flurförderzeugs 1 eine Umgebungskarte des Betriebsbereichs mit Hilfe der Sensorik 5 des Flurförderzeugs 1, die zum Beispiel Kameras, Laserscanner und Ultraschallsensoren umfassen kann, erstellt. Kommt das Flurförderzeug 1 an einer Position entlang, die es schon kartografiert hat, kann es sich mittels seiner Umgebungskarte und der Messwerte der Sensorik 5 lokalisieren. Um einen Bezug zwischen der mit beispielsweise der SLAM-Methode oder einem anderen Kartierungsverfahren mittels der Sensorik 5 aufgenommenen Umgebungskarte und der tatsächlichen Betriebsumgebung des Flurförderzeugs 1 herzustellen, wird das Referenzkoordinatensystem 3 festgelegt, das sich beispielsweise an Infrastrukturelementen des Betriebsbereichs, beispielsweise der Lagerhalle 4, orientiert. Dadurch wird ein Verständnis des Flurförderzeugs 1 darüber erzeugt, wo es sich in der eigenen erstellten Umgebungskarte und in der globalen Arbeitsumgebung befindet. Das Referenzkoordinatensystems 3 des Betriebsbereichs ist das Verständnis des Betreibers oder einer Managementsoftware, die z.B. Regale, Ladungsträger usw. kartiert und dafür das Referenzkoordinatensystem 3 als einen Bezugspunkt hat. Mit dem Bezug des Fahrzeugkoordinatensystem 2 auf das Referenzkoordinatensystem 3 des Betriebsbereichs ist ein Abgleichen von Karten verschiedener Flurförderzeuge und das Bearbeiten von Aufträgen durch Flurförderzeuge möglich, beispielsweise fahre zu Position x, y, z und lager dort eine Palette aus.

In der Figur 2 ist die Verwendung natürlicher Markierungen 6, 7, 8 zur Festlegung des Referenzkoordinatensystems 3 gezeigt. Bei den Markierungen 6 und 7 handelt es sich um Wandflächen einer Lagerhalle, deren globale Positionen im Referenzkoordinatensystem 3 bekannt sind und die von der Sensorik 5 des Flurförderzeugs 1 erfasst werden. Bei der Markierung 8 handelt es sich um ein Schild, beispielsweise ein Notausgangsschild, das an einer bekannten globalen Position des Referenzkoordinatensystems 3 aufgestellt ist und ebenfalls mittels der Sensorik 5 detektiert wird. Durch Auswertung der Sensordaten in der Datenverarbeitungseinrichtung 9 des Flurförderzeugs 1 wird das Referenzkoordinatensystem 3 festgelegt. Das Fahrzeugkoordinatensystem 2 wird mit dem Referenzkoordinatensystem 3 abgeglichen, so dass in der Datenverarbeitungseinrichtung 9 die globale Lokalisierung des Flurförderzeugs 1 in der Arbeitsumgebung ermöglicht wird.

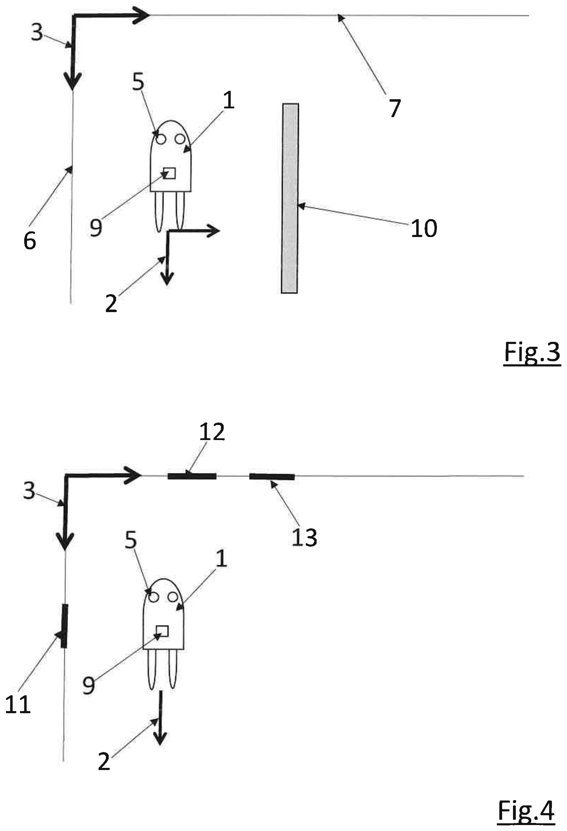

Die Figur 3 zeigt eine alternative Darstellung natürlicher Markierungen 6, 7, 10 zur Referenzkoordinatenbestimmung. Bei den Markierungen 6 und 7 handelt es sich wiederum um Wandflächen einer Lagerhalle, deren globale Positionen im Referenzkoordinatensystem 3 bekannt sind und die von der Sensorik 5 des Flurförderzeugs 1 erfasst werden. Als Markierung 10 dient in diesem Fall ein Regal oder Regalstützen eines Regals, dessen globale Position in der Lagerhalle 4 und somit im Referenzkoordinatensystem 3 ebenfalls bekannt ist und die von der Sensorik 5 des Flurförderzeugs 1 erfasst wird. Ansonsten entspricht die Anordnung der Figur 3 der Figur 2.

In der Figur 4 ist die Verwendung künstlicher Markierungen 11, 12, 13 zur Festlegung des Referenzkoordinatensystems 3 gezeigt. Die Markierungen 11, 12, 13 enthalten QR-Codes, die von der, insbesondere als Kamera ausgebildeten, Sensorik 5 des Flurförderzeugs 1 abgelesen werden können. Die QR-Codes enthalten Informationen zu den globalen Positionen der Markierungen 11, 12, 13 im Referenzkoordinatensystem 3. Die Markierungen 11, 12, 13 und deren Informationen zu den globalen Positionen im Referenzkoordinatensystem 3 werden von der Sensorik 5 des Flurförderzeugs 1 erfasst. Durch Auswertung dieser Informationen in der Datenverarbeitungseinrichtung 9 des Flurförderzeugs 1 kann das Referenzkoordinatensystem 3 festgelegt und eine Beziehung zum Fahrzeugkoordinatensystem 2 hergestellt werden, so dass eine globale Lokalisierung des Flurförderzeugs 1 ermöglicht wird.

## Patentansprüche

1. Verfahren zur Erstellen einer Karte mit einer Sensorik (5) zur Erkennung von Informationen im Betriebsbereich eines Flurförderzeugs (1), wobei ausgehend von einer Erkundungsfahrt zunächst in einer Datenverarbeitungseinrichtung (9) eine Umgebungskarte in einem Fahrzeugkoordinatensystem (2) mit Hilfe der Sensorik (5) erstellt wird, **dadurch gekennzeichnet, dass** die Umgebungskarte mit einem Referenzkoordinatensystem des Betriebsbereichs abgeglichen wird, indem die Umgebungskarte mit einer CAD-Karte des Betriebsbereichs abgeglichen wird.

2. Verfahren nach Anspruch 1, **dadurch gekennzeichnet, dass** die Umgebungskarte derart mit der CAD-Karte des Betriebsbereichs abgeglichen wird, dass die Umgebungskarte deckungsgleich mit der CAD-Karte ist.
